(19) Europäisches Patentamt
European Patent Office
Office européen des brevets

(11) **EP 4 230 670 A1**

(12) **EUROPÄISCHE PATENTANMELDUNG**

(43) Veröffentlichungstag:
**23.08.2023  Patentblatt 2023/34**

(21) Anmeldenummer: **22157474.2**

(22) Anmeldetag: **18.02.2022**

(51) Internationale Patentklassifikation (IPC):
*C08G 18/16* (2006.01)   *C08G 18/18* (2006.01)
*C08G 18/22* (2006.01)   *C08G 18/40* (2006.01)
*C08G 18/42* (2006.01)   *C08G 18/76* (2006.01)
*C08G 63/18* (2006.01)   *C08G 63/672* (2006.01)
*C08G 63/85* (2006.01)   *C08J 9/00* (2006.01)
*C08J 9/08* (2006.01)   *C08J 9/14* (2006.01)
*C08G 101/00* (2006.01)

(52) Gemeinsame Patentklassifikation (CPC):
**C08G 18/4288; C08G 18/163; C08G 18/1816;
C08G 18/225; C08G 18/4018; C08G 18/4202;
C08G 18/4211; C08G 18/4213; C08G 18/4216;
C08G 18/7664; C08G 63/183; C08G 63/672;
C08G 63/916; C08J 9/141;** C08G 2101/00;  (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG
51373 Leverkusen (DE)**

(72) Erfinder:
• **MARBACH, Jakob
51371 Leverkusen (DE)**

• **WELSCH, Nicole
51503 Rösrath (DE)**
• **RUWISCH, Mirko
51373 Leverkusen (DE)**
• **ABELS, Rene
51061 Köln (DE)**

(74) Vertreter: **Levpat
c/o Covestro AG
Gebäude K12
51365 Leverkusen (DE)**

(54) **LAGERSTABILE POLYOLFORMULIERUNGEN**

(57)     Die vorliegende Erfindung betrifft ein Verfahren zur Herstellung von Polyesterpolyolen aus Polyalkylenterephthalaten, die daraus hergestellten Polyesterpolyole sowie Formulierungen enthaltend diese Polyesterpolyole. Die Erfindung betrifft weiterhin die Verwendung dieser Polyesterpolyole zur Herstellung von Polyurethan/Polyisocyanurat-Hartschaumstoffen).

EP 4 230 670 A1

(52) Gemeinsame Patentklassifikation (CPC): (Forts.)
C08G 2110/0025; C08G 2110/005;
C08J 2203/14; C08J 2375/04

**Beschreibung**

Die vorliegende Erfindung betrifft eine Verbesserung des Herstellungsverfahrens von Polyesterpolyolen aus Polyalkylenterephthalaten (PAT), die Polyesterpolyole erhalten mit diesem neuem Herstellungsverfahren (im Folgenden auch PAT-PES genannt), sowie die Verwendung dieser Polyesterpolyole PAT-PES zur Herstellung von Polyurethan (PUR) - und Polyurethan/Polyisocyanurat-Hartschaumstoffen (im Folgenden auch PUR/PIR-Hartschaumstoffe genannt), wie sie in wachsendem Masse zum Beispiel zur thermischen Isolierung von Gebäuden, Klimaschächten oder Fernwärmeleitungen eingesetzt werden. Sie tragen somit zur Verringerung der Emission von klimawirksamen Gasen durch Heizung und Kühlung unter Verwendung fossiler Energieträger bei.

PUR- bzw. PUR/PIR-Hartschaumstoffe werden typischerweise durch Umsetzung einer Polyol- mit einer Isocyanatkomponente in Gegenwart eines Treibmittels hergestellt. Weiterhin können Additive wie Schaumstabilisatoren und Flammschutzmittel zugesetzt werden.

Polyesterpolyole sind ein wichtiger Bestandteil vieler geschäumter und nicht geschäumter Polyurethansysteme. Derartige Polyesterpolyole werden häufig durch Kondensation von aromatischen und/oder aliphatischen Dicarbonsäuren und Alkandiolen und/oder -triolen sowie Etherdiolen gebildet. Bei der Verwendung von aromatischen Dicarbonsäuren ist beispielsweise aus WO 2010/043624 bekannt, dass Terephthalsäure-basierte Polyester bezüglich Ihres Brandverhaltens Phthalsäure-basierten Polyestern überlegen sind. Es ist ebenfalls bekannt, dass zur Herstellung von Polyesterpolyolen Polyalkylenterephthalate (PAT), insbesondere Poly(ethylenterephthalat) (PET) und Poly(butylenterephthalat) (PBT) - Recyclate eingesetzt werden können. Die Verwendung von Polyalkylenterephthalaten führt jedoch häufig zu Produkten, deren Viskosität hoch ist und / oder die während ihrer Lagerung kristallisieren oder sedimentieren. Wünschenswert sind daher Produkte, die bei Raumtemperatur klar und flüssig sind und während ihrer Lagerung kein Sediment bilden. Ein weiteres Problem bei PAT-basierten Polyesterpolyolen ist das Ausflocken bei der Mischung mit anderen Formulierungsbestandteilen, insbesondere in Gegenwart von Wasser.

Um dieses Problem zu lösen, offenbart EP 0974611 die Herstellung von klaren Polyesterpolyolen, bestehend aus einem Umsetzungsprodukt von PAT, einem aliphatischen Dicarbonsäuregemisch, sowie eines zyklischen Alkandiol-Esters. Nachteilig ist hierbei die eingeschränkte Verfügbarkeit sowohl des Dicarbonsäuregemisches als auch des Ringester-Additivs. Zudem werden keinerlei Eigenschaften von PUR/PIR-Hartschaumstoffen unter Verwendung des klaren Polyesterpolyols beschrieben.

EP 3283545 offenbart die Herstellung von klaren Polyesterpolyolen basierend auf PET durch den Zusatz von mehr als 10 Gew.% eines "Clarifiers (Bisphenol A-Analoge/Derivate)", sowie die relativ hohen OH-Zahlen der offenbarten Polyesterpolyole. Die Anwendung in PUR/PIR-Hartschaumstoffen ist nicht beschrieben.

US 4559370 zeigt, dass klare Polyesterpolyole erhalten werden können, wenn 50% des über PAT eingetragenen Ethylenglykols destillativ entfernt werden. Dies wird bestätigt durch JP 2000191756 und EP 1178062, die das so verlorene Ethylenglykol durch Alkoxylierung, beispielsweise mit Ethylenoxid, verlängern und als verlängertes Diol wieder in die Reaktion zurückführen.

EP 3957665 offenbart ein Verfahren zur Herstellung von lagerstabilen Polyesterpolyolen auf Basis PAT, bei dem ein Carbonsäuregemisch aus mindestens vier verschiedenen Carbonsäuren bzw. Carbonsäurederivaten (im weiteren auch zusammen mit "Carboxy-funktionelle Verbindungen" bezeichnet) eingesetzt wird, welches neben der Terephthalsäure bzw. dem Terephthalsäurederivat, insbesondere PAT, zusätzlich mindestens eine weitere aromatische Dicarbonsäure bzw. Dicarbonsäurederivat, mindestens eine aliphatische Dicarbonsäure bzw. Dicarbonsäurederivat, sowie eine Monocarbonsäure bzw. Monocarbonsäurederivat enthält, mit einem Gemisch aus bestimmten Alkoholen umgesetzt wird.

Ein dem Fachmann bekanntes großtechnisches Herstellverfahren von Polyesterpolyolen, welches z.B. auch in der EP 0974611 A verwendet wird, ist die einstufige Veresterungsreaktion, bei der alle Reaktanden zusammen vorgelegt und durch Erhitzen zur Reaktion gebracht werden. Das Austragen des Reaktionswassers wird durch Anlegen eines Unterdrucks, insbesondere gegen Ende der Veresterung, unterstützt. Die Vakuumphase der Veresterung bzw. Umesterungsreaktion wird bei reduzierten Drücken von < 600 mbar, insbesondere bei Drücken unter 500 mbar, durchgeführt

Bei Einsatz von Carbonsäureestern werden die erfindungsgemäßen Polyesterpolyole durch Umesterung hergestellt. Werden Ester der Carbonsäuren mit niedermolekularen Alkoholen eingesetzt, können die in den niedermolekularen Estern enthaltenen Alkohole dem Reaktionsgemisch entzogen werden. Häufig werden die Dimethyl - oder Diethylester eingesetzt.

Standardmäßig erfolgt der Abbruch der Reaktion, wenn die gewünschte Säurezahl erreicht ist.

Immer wieder kommt es aber selbst bei den im Stand der Technik als bevorzugt beschriebenen Verfahren zu Problemen mit der Lagerstabilität der Polyesterpolyole hergestellt aus PAT, was sich optisch in einer Eintrübung der Produkte bemerkbar macht, die im Laufe der Zeit stärker wird und auch die Verarbeitungseigenschaften und Qualität der aus den Polyolen hergestellten Produkte beeinflusst.

Es hat sich gezeigt, dass die im Stand der Technik beschriebenen Vorschläge zur Vermeidung von Eintrübung vor allem bei Polyesterpolyolen, welche eine Säurezahl von > 1,6 mg KOH/g, insbesondere 1,7 - 3,5 mg KOH/g aufweisen, nicht ausreichen.

Aufgabe der vorliegenden Erfindung war es daher, das Herstellungsverfahren von Polyesterpolyolen basierend auf PAT, weiter zu optimieren, so dass auch ohne die Zugabe von Additiven klare, lagerstabile Polyesterpolyole mit Säurezahlen von > 1,6 mg KOH/g , insbesondere 1,7 - 3,5 mg KOH/g erhalten werden können. Als lagerstabil wird ein Polyol oder eine Polyolformulierung bezeichnet, wenn über einen Zeitraum von mindestens 90 Tagen keine Trübung oder Sedimentation eintritt.

Diese Aufgabe konnte überraschenderweise dadurch gelöst werden, dass die Reaktion erst dann abgebrochen wird, wenn das Reaktionsgemisch einerseits die gewünschte Säurezahl aufweist und weiterhin die Konzentrationsänderung an freien Alkoholen aus der Gruppe bestehend aus 1,2-Ethandiol, 1,3-Propandiol und 1,4-Butandiol im Gemisch weniger als 0,1 Gew-% / h beträgt.

Die Erfindung betrifft ein Verfahren zur Herstellung eines Polyesterpolyols PAT-PES mit einer Säurezahl von > 1,6 mg KOH/g , insbesondere 1,7 - 3,5 mg KOH/g, ganz besonders bevorzugt von 2,0 - 3,0 mg KOH/g, enthaltend die Schritte

    a. Vorlegen eines Reaktionsgemisches R umfassend mindestens

- ein Polyalkylenterephthalat (PAT) aus Terephthalsäure und einem Diol ausgewählt aus der Gruppe bestehend aus 1,2-Ethandiol, 1,3-Propandiol und 1,4-Butandiol (PAT-AK),
- eine aliphatische Dicarbonsäure oder Dicarbonsäurederivat (CS3) und
- mindestens ein Diol mit einem Molgewicht von 100-190 g/mol oder ein Derivat davon (AK2),

    b. Umsetzung des Reaktionsgemisches R bei einer Temperatur von mindestens 210 °C,

gekennzeichnet dadurch, dass die Umsetzung abgebrochen wird, wenn das Reaktionsgemisch die gewünschte Säurezahl von > 1,6 mg KOH/g, insbesondere 1,7 - 3,5 mg KOH/g ("Zielsäurezahl") aufweist und die Konzentrationsänderung an freien Diolen PAT-AK im Gemisch weniger als 0,1 Gew-% / h beträgt.

In einer bevorzugten Ausführungsform enthält R weiterhin mindestens eine aliphatische Monocarbonsäure oder ein aliphatisches Monocarbonsäurederivat.

In einer besonders bevorzugten Ausführungsform enthält R weiterhin mindestens eine aliphatische Monocarbonsäure oder ein aliphatisches Monocarbonsäurederivat, und mindestens eine aromatische Dicarbonsäure oder ein aromatisches Dicarbonsäurederivat verschieden von Terephthalsäure bzw. einer Terephthalsäureverbindung.

Polyalkylenterephthalat

Die Reaktionsmischung R umfasst mindestens ein Polyalkylenterephthalat (PAT) ausgewählt aus Polyestern der Terephthalsäure mit einem oder mehreren Alkoholen ausgewählt aus 1,2-Ethandiol, 1,4-Butandiol und 1,3-Propandiol. Der im Polyalkylenterephthalat eingebaute Alkohol wird im Folgenden mit "PAT-AK" bezeichnet. Insbesondere weist das eingesetzte Polyalkylenterephthalat eine OH-Zahl von < 60 mg KOH/g auf.

Besonders handelt es sich bei dem eingesetzten PAT um Mischungen überwiegend enthaltend Polyethylenterephthalat. Aber auch mit Cyclohexandimethanol modifiziertes Polyethylenterephthalat sowie aromatisch-aliphatische Copolyester (z.B. erhältlich unter dem Markennamen Ecoflex) können eingesetzt werden. Das PAT kann weiterhin auch terephthalsäure-basierte Nebenprodukte aus der Herstellung der genannten Polyester enthalten. In einer Ausführungsform können die genannten Polyester auch mit anderen Polykondensationspolymeren wie Polyamiden (z.B. Polyamid 6, Polyamid 66, MXD6 und anderen) als Compounds, als physikalische Mischung und/oder als Laminate vorliegen. Die Terephthalate können auch mit anderen Polymeren wie Polyolefinen oder PVC oder anderen Materialien wie Papier, Metall oder Staub verunreinigt sein, die im Endprodukt als Nebenprodukte vorliegen und dort verbleiben oder durch Abtrennung entfernt werden.

Weitere Carbonsäurekomponenten

R kann neben PAT auch ein oder mehrere weitere Verbindungen CS1 ausgewählt aus der Gruppe bestehend aus Terephthalsäure und ihren Derivaten enthalten, wobei CS1 unterschiedlich von PAT ist.

Weiterhin kann R ein oder mehrere Verbindungen CS2 ausgewählt aus der Gruppe bestehend aus mehrwertigen aromatischen carboxyfunktionellen Verbindungen, insbesondere difunktionellen aromatischen Säuren und difunktionellen aromatischen Carbonsäurederivaten, welche unterschiedlich von PAT sind, enthalten, z.B. Carbonsäurechloride, Carbonsäureanhydride und Carbonsäurealkylester. Insbesondere werden die freien Säuren oder deren Anhydride eingesetzt. Bevorzugt eingesetzt werden Verbindungen, die von Phthalsäure, Isophthalsäure, Naphthalindicarbonsäure, Furandicarbonsäure, oder Kombinationen von diesen Säuren abgeleitet sind, insbesondere von Phthalsäure. Auch Tricarbonsäuren wie Trimellithsäure und ihre Derivate sind als Comonomere möglich. Die unter die Definition von CS2 fallenden Polyethylennaphthalate, Isophthalate oder Polyethylenfuranoate können auch in den eingesetzten Polyalkylenterephthalaten PAT als Nebenprodukte enthalten sein.

Weiterhin enthält R mindestens eine Verbindung CS3 ausgewählt aus der Gruppe bestehend aus zweiwertigen aliphatischen carboxyfunktionellen Verbindungen, insbesondere aliphatischen Dicarbonsäuren und deren reaktiven Derivaten, z.B. Carbonsäurechloriden, Carbonsäureanhydriden, Carbonsäureamiden und Carbonsäurealkylestern. Insbesondere werden die freien Säuren oder deren Anhydride eingesetzt. Die Dicarbonsäuren sind vor allem ausgewählt aus der Gruppe bestehend aus aliphatischen Dicarbonsäuren mit einer Säurezahl von >300 mg KOH/g bzw. deren Derivate. Bevorzugt sind Verbindungen, die von C4 - bis C12 - Dicarbonsäuren, insbesondere von Adipinsäure, Glutarsäure, Bernsteinsäure, Pimelinsäure, Korksäure, Azelainsäure, Decandicarbonsäure, Maleinsäure, Fumarsäure, Malonsäure, Sebacinsäure und Mischungen einer oder mehrerer dieser Säuren abgeleitet sind, ganz besonders bevorzugt von Adipinsäure. Auch Nebenprodukte aus der Herstellung dieser Säuren können geeignet sein. Die Adipinsäure kann auch in Form von Polyamid 66, z.B. als Compound mit Komponente PAT, eingetragen werden.

Weiterhin kann R ein oder mehrere Verbindungen CS4 ausgewählt aus der Gruppe bestehend aus aromatischen und aliphatischen Monocarbonsäuren und deren Derivaten enthalten, z.B. eine oder mehrere Verbindungen aus der Gruppe bestehend aus Fettsäuren und Fettsäurederivaten, z.B. Triglyceriden wie Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl (Sojaöl), Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Tallöl und seine Komponenten, Fettsäurechloriden und Fettsäurealkylestern, Hydroxymodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure, insbesondere Ölsäure. Die Monocarbonsäure-Komponente kann aber auch ein Derivat der Benzoesäure, eine Hydroxycarbonsäure wie ein geöffnetes Lacton bzw. eine Hydroxybenzoesäure oder eine Aminocarbonsäure sein, wie sie bei der Ringöffnung von Lactamen bzw. bei der Hydrolyse von Polyamid 6 entstehen. Polyamid 6 kann gegebenenfalls als Compound mit Komponente PAT eingetragen werden. Auch Nebenprodukte aus der Herstellung dieser Säuren können geeignet sein. In einer sehr bevorzugten Ausführungsform besteht die Komponente CS4 vollständig aus natürlichen, gegebenenfalls umgeesterten oder hydrolysierten oder hydratisierten Triglyzeriden. Insbesondere bevorzugt ist der Einsatz von Sojaöl.

R kann neben den oben genannten Säurekomponenten noch weitere Verbindungen enthalten, welche sich von solchen Carbonsäuren (CS5) ableiten lassen, welche nicht unter die Komponenten PAT bzw. CS1 - CS4 fallen.

Die Komponenten PAT sowie CS1 - CS5 können auch in Form von Produktmischungen eingesetzt werden, beispielsweise werden bei der Oxidation von Cyclohexan, wie in WO2010088227 beschrieben, Mischungen aus Dicarbonsäuren CS3 und Monocarbonsäuren CS4 erhalten, welche als Einsatzstoff geeignet sind.

Weitere alkoholische Komponenten AK

Neben der Alkoholkomponente AK-PAT im PAT enthält R auch weitere alkoholische Verbindungen.

Die zur Veresterung benötigten Alkohole (AK) können als freie Alkohole oder in Form ihrer Derivate eingesetzt werden, z.B. in Form ihrer Ester in Verbindung mit einer der Säurekomponenten aus CS1- CS5, oder aber als Alkoxylate. Mehrwertige Alkohole können auch in Form ihrer zyklischen Carbonate, Ketale und Acetale eingesetzt werden.

Die Reaktionsmischung R kann zusätzlich zu den in der im PAT enthaltenen alkoholischen Komponente PAT-AK weitere niedermolekulare alkoholischen Komponenten AK 1 enthalten, welche ausgewählt sind aus der Gruppe bestehend aus Verbindungen, die von Diolen mit einem Molgewicht <100 g/mol abgeleitet sind. Die Alkohole AK1 können auch gleich PAT-AK sein. Zu AK1 gehören zum Beispiel Ethandiol sowie die isomeren Butandiole, Butendiole und Butindiole und Propandiole, besonders bevorzugt Ethandiol, und die Ester dieser Verbindungen mit den oben genannten Säurekomponenten.

Die Reaktionsmischung R enthält mindestens eine alkoholische Verbindung AK2, die ausgewählt ist aus der Gruppe bestehend aus Verbindungen, welche von Diolen mit einem Molekulargewicht von 100-190 g/mol abgeleitet sind. Die Alkohole AK2 weisen im Mittel >80 mol-% primäre aliphatische OH-Funktionen auf. In einer bevorzugten Ausführungsform weist die Komponente AK2 100 mol-% primäre aliphatische OH-Funktionen auf. Zu dieser Gruppe gehören beispielsweise die Verbindungen Diethylenglykol, Triethylenglykol, 1,5-Pentandiol, Neopentylglykol, 1,6-Hexandiol und 2-Butyl-2-ethyl-1,3-propandiol. Die genannten Glykole können auch in Form ihrer Derivate, z.B. zyklische Carbonate, als Ketale und/oder Acetale eingesetzt werden. Die Gruppe enthält jedoch bevorzugt keine aromatischen Diole bzw. deren Derivate wie Alkoxylate und Carbonate. In einer bevorzugten Ausführungsform enthält die Komponente AK2 mehr als 80 mol% Diethylenglykol. In geringer Menge kann die Komponente AK2 auch Diole mit sekundären Hydroxylgruppen enthalten, beispielsweise Isosorbit und Dipropylenglykole.

Weiterhin kann die Reaktionsmischung R ein oder mehrere alkoholische Verbindungen AK3 enthalten, welche ausgewählt sind aus der Gruppe bestehend aus Diolen mit einem Molekulargewicht > 190 g/mol, bevorzugt 191 - 800 g/mol und ihren Derivaten. Hierzu gehören modifizierte Diole der Gruppe AK2, wie z.B. 2,3-Dibrombuten-1,4-diol, und höhermolekulare Diole, insbesondere oligomere und polymere Polyalkylenoxide wie z.B. Polyethylenglykole, Tripropylenglykole und Alkoxylate von Dihydroxybenzol. In einer bevorzugten Ausführungsform werden in dem erfindungsgemäßen Herstellungsverfahren keine aromatischen Verbindungen AK3 eingesetzt, insbesondere keine Bisphenole vom Typ $X(C_6H_4-OH)_2$ (X = $CH_2$, $C(CH_3)_2$, S, $SO_2$) und ihre Carbonate und Alkylenoxid-Addukte eingesetzt.

In bestimmten Ausführungsformen kann R insbesondere auch > 3 Mol% Polyethylenglykol, insbesondere 3,1 - 15 %, mehr besonders 4 - 10 Mol% enthalten (bezogen auf alle alkoholischen Komponenten in den Ausgangsverbindungen). Dies kann sich günstig auf die Elastizität in der Dämmplatte auswirken.

Weiterhin kann die Reaktionsmischung R ein oder mehrere alkoholische Verbindungen AK4 enthalten, welche ausgewählt sind aus der Gruppe bestehend aus Polyhydroxylverbindungen mit einer Funktionalität ≥3 und Verbindungen, die davon abgeleitet sind (AK4), wie z.B. Pentaerythrol und die Nebenkomponenten bei seiner Herstellung, Trimethylolalkane wie Trimethylolpropan, insbesondere Glyzerin, welches insbesondere aus eingesetzten Fettsäurederivaten stammt.

Weiterhin kann die Reaktionsmischung R ein oder mehrere alkoholische Verbindungen AK5 enthalten, welche ausgewählt sind aus der Gruppe bestehend aus Monoolen (AK5) und deren Derivate, z.B. nichtionische Tenside, beispielsweise alkoxylierte Dialkyl- und Styrylphenole, alkoxylierte C8-C20 Monocarbonsäuren und C8-C20 Monole und deren Alkoxylate. Die Alkohole können auch in Form ihrer Derivate eingesetzt werden. In einer bevorzugten Ausführungsform werden in dem erfindungsgemäßen Herstellungsverfahren von PAT-PES keine alkoxylierten Octyl-Nonylphenole eingesetzt.

In einer Ausführungsform führt der Stickstoffgehalt in den Ausgangskomponenten der Polyestersynthese zu einem Stickstoffgehalt von mindestens 0,1 Gew. -% im Polyester PAT-PES.

In einer bevorzugten Ausführungsform führt der Stickstoffgehalt in den Ausgangskomponenten der Polyestersynthese zu einem Stickstoffgehalt von weniger als 0,1 Gew.-% im Polyester PAT-PES.

Gegenstand der Erfindung ist daher auch ein Verfahren zur Herstellung eines Polyesterpolyols PAT-PES, bei dem ein Gemisch aus einem Polyalkylenterephthalat mit einem Gemisch CS aus Carboxy-funktionellen Verbindungen umfassend:

CS1  gegebenenfalls einer oder mehrerer weiterer Verbindungen ausgewählt aus der Gruppe bestehend aus Terephthalsäure und Derivaten der Terephthalsäure,

CS2  optional, bevorzugt mindestens eine, von PAT und CS 1 verschiedene Verbindung ausgewählt aus der Gruppe bestehend aus aromatischen Dicarbonsäuren und deren Derivate, insbesondere ein niedermolekulares Derivat, ganz besonders bevorzugt Phthalsäureanhydrid,

CS3  mindestens eine Verbindung ausgewählt aus der Gruppe bestehend aus aliphatischen Dicarbonsäuren und deren Derivaten,

CS4  optional, bevorzugt mindestens eine Verbindung ausgewählt aus der Gruppe bestehend aus Monocarbonsäuren mit einem Molgewicht ≥100 g/mol und deren Derivaten,

CS5  optional weitere Carbonsäuren und / oder deren Derivate,

mit einem Gemisch AK aus alkoholischen Verbindungen umfassend:

AK1  optional mindestens eine Verbindung ausgewählt aus der Gruppe bestehend aus Diolen mit einem Molgewicht <100 g/mol und deren Derivate,

AK2  mindestens eine Verbindung ausgewählt aus der Gruppe bestehend aus Diolen mit einem Molgewicht von 100-190 g/mol, bevorzugt mit >80 mol-% der OH-Funktionen primäre aliphatische OH-Funktionen, und deren Derivate,

AK3  optional eine oder mehrere Verbindungen ausgewählt aus der Gruppe bestehend aus (insbesondere nicht-aromatischen) Diolen mit einem Molgewicht von >190 g/mol, bevorzugt 191 - 800 g/mol, oder deren Derivate,

AK4  optional eine oder mehrere Verbindungen ausgewählt aus der Gruppe bestehend aus bestehend aus Polyhydroxylverbindungen mit einer Funktionalität ≥3 und mit einem Molgewicht 90-190 g/mol (keine Polyether) und deren Derivaten

AK5  optional ein oder mehrere Monoole, z. B. nichtionische Tenside, und / oder Derivate dieser Alkohole,

optional in Gegenwart eines Veresterungskatalysators K. Insbesondere werden die Edukte bevorzugt in Gegenwart von 0-0,2 Gew.-% bezogen auf die Summe von CS und AK, eines Metallsalzes miteinander umgesetzt.

Als Katalysatoren K kommen im Prinzip sämtliche für die Herstellung von Polyestern bekannte Katalysatoren in Frage. Dies sind beispielsweise Zinn-Salze, z.B. Zinndichlorid oder Zinndiethylhexanoat, Titanate, z.B. Tetrabutyltitanat oder Tyzor EZ oder starke Säuren, z.B. p-Toluolsulfonsäure, sowie Organozinnverbindungen, z.B. Dibutylzinndilaurat oder Salze des Wismuts, sowie die Carboxylate des Zinks, des Mangans, und anderer Übergangsmetalle. Die Polyesterpolyole PAT-PES können aber auch ohne den Einsatz von Katalysatoren hergestellt werden. Der Katalysator kann zu Beginn, oder im Laufe der Reaktion zugegeben werden und auch ggf. im Laufe der Reaktion gezielt desaktiviert werden.

Herstellungsverfahren

Das erfindungsgemäße Herstellungsverfahren enthält die Schritte

    a. Vorlegen eines Reaktionsgemisches R umfassend mindestens

- ein Polyalkylenterephthalat (PAT) aus Terephthalsäure und einem Diol ausgewählt aus der Gruppe bestehend aus 1,2-Ethandiol, 1,3-Propandiol und 1,4-Butandiol (PAT-AK),
- eine aliphatische Dicarbonsäure oder Dicarbonsäurederivat (CS3) und
- mindestens ein Diol mit einem Molgewicht von 100-190 g/mol oder ein Derivat davon (AK2),

    b. Umsetzung des Reaktionsgemisches R bei einer Temperatur von mindestens 210 °C,

gekennzeichnet dadurch, dass die Umsetzung abgebrochen wird, wenn das Reaktionsgemisch die gewünschte Säurezahl von > 1,6 mg KOH/g, insbesondere 1,7 - 3,5 mg KOH/g ("Zielsäurezahl") aufweist und die Konzentrationsänderung an freien Diolen PAT-AK im Gemisch weniger als 0,1 Gew-% / h beträgt.

Die Edukte werden in Schritt a) vorgelegt. Normalerweise und bevorzugt geschieht dies ohne Verwendung eines Lösungsmittels. Die Veresterung kann aber auch unter Zusatz eines Lösungsmittels erfolgen, insbesondere eines wasserschleppenden Lösungsmittel (Azeotropveresterung), wie etwa Benzol, Toluol oder Dioxan.

Bei Einsatz von Carbonsäureestern werden die erfindungsgemäßen Polyesterpolyole durch Umesterung hergestellt. Werden Ester der Carbonsäuren mit niedermolekularen Alkoholen eingesetzt, können die in den niedermolekularen Estern enthaltenen Alkohole dem Reaktionsgemisch entzogen werden. Häufig werden die Dimethyl - oder Diethylester eingesetzt. Hierbei können ebenfalls Lösungsmittel, wie etwa Benzol, Toluol oder Dioxan, verwendet werden, um die in den niedermolekularen Estern enthaltenen Alkohole dem Reaktionsgemisch azeotrop zu entziehen.

Der gegebenenfalls eingesetzte Katalysator kann entweder direkt in Schritt a), oder vor oder während des Schritts b) zugegeben werden.

Die Säurezahl der Reaktionsmischung ("Startsäurezahl") ist abhängig von der Konzentration an freien Säuren in der Mischung. Ist die Startsäurezahl zu niedrig, d.h. kleiner als die gewünschte Säurezahl, welche in einem Bereich von > 1,6 mg KOH/g, insbesondere 1,7 - 3,5 mg KOH/g ("Zielsäurezahl") liegt, muss der Reaktionsmischung Wasser hinzugefügt werden, um aus den Reaktanden die freien Säuren freizusetzen.

Anschließend werden die Edukte in Schritt b) durch Erhitzen auf eine Temperatur > 210 °C, bevorzugt > 220 °C, miteinander zur Reaktion gebracht, wobei neben dem Polyesterpolyol als Nebenprodukte Reaktionswasser und / oder, im Falle einer Umesterung, Alkohole entstehen. Das Austragen von Wasser und der leichtflüchtigen Nebenprodukte (vor allem Methanol, Ethanol) kann auch durch das Durchleiten eines inerten Gases, etwa Stickstoff oder Argon, unterstützt werden.

Insbesondere wird das Austragen der Nebenprodukte und ggfs. des Lösungsmittels von Anfang an oder insbesondere gegen Ende der Reaktion durch Anlegen eines Unterdrucks unterstützt. Hierbei werden reduzierte Drücke, insbesondere ≤ 600 mbar, noch mehr bevorzugt Drücken unter 500 mbar, angewendet.

Während der Umsetzung reduziert sich die Säurezahl der Reaktionsmischung durch die Veresterungsreaktion und die alkoholische Komponente PAT - AK wird aus dem PAT freigesetzt, wodurch die Konzentration der freien Alkohole PAT - AK in der Reaktionsmischung zunimmt.

Die Geschwindigkeit der Reduktion der Säurezahl kann insbesondere gesteuert werden durch die Höhe des angelegten Unterdrucks, welches entfernt bzw. reduziert wird, wenn das Produkt die gewünschte Säurezahl von > 1,6 mg KOH/g , insbesondere 1,7 - 3,5 mg KOH/g, ganz besonders bevorzugt 2,0 - 3,0 mg KOH/g erreicht hat bzw. sich dieser Säurezahl nähert.

Üblicherweise bricht der Fachmann die Reaktion bei Erreichen der gewünschten Säurezahl ab.

Erfindungsgemäß wird im Gegensatz zur Fahrweise des Stands der Technik das erhaltene Reaktionsgemisch nun bei Temperaturen von mindestens 210°C, bevorzugt 220 °C, weitergerührt, bis die Konzentration an freien Diolen PAT-AK in der Reaktionsmischung einen konstanten Wert erreicht. Ein "konstanter Wert der Konzentration an freien Diolen PAT-AK" bedeutet im Sinne dieser Anmeldung, dass die Änderung des Gehalts an freien PAT-AK (Summe Gehalt an 1,2-Ethandiol, 1,3-Propandiol, 1,4-Butandiol), in der Reaktionsmischung pro Stunde weniger als 0,1 Gew-% (bezogen auf das Gesamtgewicht des Gemisches) beträgt. Falls die Reaktionsmischung also neben der Alkoholkomponente aus dem PAT weitere Alkohole enthält, welche gleich PAT-AK aus PAT sind, werden diese zu dem Gehalt an freien PAT-AK hinzugerechnet.

In einer bevorzugten Ausführungsform wird das Austragen der Nebenprodukte und gegebenenfalls des Lösungsmittels von Anfang an oder insbesondere gegen Ende der Reaktion durch Anlegen eines Unterdrucks unterstützt. Hierbei werden reduzierte Drücke, insbesondere ≤ 600 mbar, noch mehr bevorzugt Drücke unter 500 mbar, angewendet und das Vakuum wird entfernt, wenn das Produkt die gewünschte Säurezahl von > 1,6 mg KOH/g , insbesondere 1,7 - 3,5 mg KOH/g erreicht hat. Danach wird das erhaltene Reaktionsgemisch bei Temperaturen von mindestens 210 °C, bevorzugt 220 °C, weitergerührt, bis die Konzentration an freien Diolen PAT-AK in der Reaktionsmischung einen konstanten Wert erreicht.

Alternativ kann aber auch die Veresterungsreaktion durch Anlegen eines nur geringen Vakuums von > 600 mbar so langsam gefahren werden, dass die Zielsäurezahl und die Konstanz der freien Diole PAT-AK gleichzeitig erreicht werden. Hierdurch kann sich unter Umständen die Gesamtreaktionszeit verlängern.

Gegenstand der Erfindung sind ebenfalls die Polyesterpolyole **PAT-PES** mit einer Säurezahl von > 1,6 mg KOH/g , insbesondere 1,7 - 3,5 mg KOH/g, hergestellt nach dem erfindungsgemäßen Verfahren. Die Grenzen stellen sicher, dass eine Blockade aminischer Katalysatoren durch Überführung in Ammoniumsalze nur begrenzt erfolgt und die Reaktionskinetik der Schäumreaktion beschränkt ist. Die Polyesterpolyole PAT-PES hergestellt nach dem erfindungsgemäßen Verfahren sind lagerstabil, was im Sinne dieser Anmeldung bedeutet dass über einen Zeitraum von mindestens 90 Tagen bei Raumtemperatur keine Trübung eintritt.

Insbesondere sind die nach dem erfindungsgemäßen Verfahren hergestellten Polyesterpolyole PAT-PES aufgebaut aus Baueinheiten cs, die von Säurekomponenten abgeleitet sind, und Baueinheiten ak, welche von alkoholischen Komponenten abgeleitet sind, in der folgenden Zusammensetzung:

| | | | |
|---|---|---|---|
| cs1 | 40-60 Mol.-% bezogen auf cs, | bevorzugt 45-55 Mol.%, Baueinheiten abgeleitet von Terephthalsäure, | |
| cs2 | 8-28 Mol.-% bezogen auf cs, | bevorzugt 10-20 Mol.-%, Baueinheiten abgeleitet von mindestens einer weiteren von PAT verschiedenen aromatischen Dicarbonsäure, | |
| cs3 | 15-35 Mol.-% bezogen auf cs, | bevorzugt 25-35 Mol.-%, Baueinheiten abgeleitet von mindestens einer aliphatischen Dicarbonsäure, insbesondere einer C4- bis C12-Dicarbonsäure, | |
| cs4 | 4-14 Mol.-% bezogen auf cs, | Baueinheiten abgeleitet von mindestens einer Monocarbonsäure mit einem Molgewicht ≥100 g/mol, und | |
| cs5 | 0-33 Mol.-% bezogen auf cs, | Baueinheiten abgeleitet von weiteren Carbonsäuren, | |

besteht, und wobei ak aus

| | | |
|---|---|---|
| ak1 | 25-40 Mol.-% bezogen auf ak, | bevorzugt 25-38 Mol.-% Baueinheiten abgeleitet von ein oder mehreren Diolen mit einem Molgewicht <100 g/mol, |
| ak2 | 60-75 Mol.-% bezogen auf ak, | Baueinheiten abgeleitet von ein oder mehreren Diolen mit einem Molgewicht von 100-190 g/mol, bevorzugt sind >80 mol-% der OH-Funktionen primäre aliphatische OH-Funktionen, |
| ak3 | 0-3 Mol.-% bezogen auf ak, | Baueinheiten abgeleitet von ein oder mehreren (insbesondere nicht-aromatischen) Diolen mit einem Molgewicht > 190 g/mol, bevorzugt 191 - 800 g/mol, |
| ak4 | 0-3 Mol.-% bezogen auf ak, | Baueinheiten abgeleitet von ein oder mehreren Polyolen mit einer Funktionalität ≥3 und mit einem Molgewicht 90-190 g/mol (keine Polyether), |
| ak5 | 0-15 Mol.-% bezogen auf ak, | Baueinheiten abgeleitet von ein oder mehreren Monoolen, z. B. nichtionische Tensiden. |

Die Einwaagen der Ausgangskomponenten für die Polyestersynthese PAT, CS 1 - CS5 und AK 1 - AK5 werden nach dem Fachmann bekannten Methoden so berechnet, dass sich in der Bilanz die gewünschte Zusammensetzung des Polyesterpolyols PAT-PES ergibt. Niedermolekulare Reaktanden, die während der Reaktion dem Reaktionsgemisch wieder entzogen werden, sind selbstverständlich abzuziehen.

Die Polyesterpolyole PAT-PES weisen bevorzugt eine Viskosität von ≤8 Pa*s (25°C), insbesondere 1 - 8 Pa*s (25°C), besonders bevorzugt 1 - 7 Pa*s (25°C) und ganz besonders bevorzugt von 1 - 5 Pa*s (25 °C) auf.

In einer Ausführungsform weist das Polyesterpolyol PAT-PES Hydroxylzahlen von 150 bis 350 mg KOH/g auf, bevorzugt von 160 bis 260 mg KOH/g, besonders bevorzugt von 165 bis 260 mg KOH/g auf.

Das Polyesterpolyol kann ferner eine OH-Funktionalität von 1,8 bis 3 besitzen, bevorzugt 1,9 bis 2,5, insbesondere bevorzugt von 1,9 - 2,1.

Die vorliegende Erfindung betrifft des Weiteren die Verwendung der erfindungsgemäß hergestellten Polyesterpolyole PAT-PES basierend auf Polyalkylenterephthalaten für die isocyanat-reaktive Komponente B) eines Reaktionssystems zur Herstellung von PUR-/PIR-Hartschaumstoffen.

Weiterhin betrifft die Erfindung ein Reaktionssystem zur Herstellung von PUR- und PUR-/PIR-Hartschaumstoffen, umfassend die folgenden Komponenten:

A) eine organische Polyisocyanatkomponente;
B) eine isocyanat-reaktive Komponente umfassend das Polyesterpolyol PAT-PES,
C) optional Hilfs- und Zusatzstoffe sowie
D) optional Treibmittel und Co-Treibmittel,

wobei die organische Polyisocyanatkomponente A) zu den Komponenten B) und ggf. C) in einem solchen Mengenverhältnis zueinander eingesetzt sind, dass sich ein Index von 100 bis 500 ergibt, insbesondere von 140 bis 450 und das Reaktionssystem dadurch gekennzeichnet ist, dass die Polyolkomponente B) mindestens ein erfindungsgemäßes Polyesterpolyol PAT-PES umfasst.

Mit Index, bzw. Kennzahl wird das molare Verhältnis aller NCO-Gruppen der Komponente A) zu allen NCO reaktiven Gruppen in dem Reaktionssystem, vorliegend also der Komponenten B) und C) bezeichnet.

Die Erfindung betrifft auch die Verwendung der erfindungsgemäßen Polyesterpolyole PAT-PES als oder in der Komponente B) eines Reaktionssystems zur Herstellung von PUR- und PUR/PIR-Hartschaumstoffen. Unter PUR/PIR-Hartschaumstoffen werden solche Polyurethan-Hartschaumstoffe verstanden, die Polyisocyanurat-modifizierte Urethan-Strukturen enthalten. Solch ein Reaktionssystem für PUR/PIR-Hartschaumstoffe eignet sich in bevorzugter Weise für die Herstellung von Polyurethan-Hartschaum-Produkten, wie zum Beispiel Polyurethan-Dämmplatten, Metall-Verbund-Elementen, Polyurethan-Blockschaum, Polyurethan-Sprühschaum, Polyurethan-Ortschäume oder auch in Ein- oder Mehrkomponenten-Montageschaum oder als Klebstoff-Rohstoff.

Die isocyanat-reaktive Komponente B) enthält mindestens ein erfindungsgemäßes Polyesterpolyol PAT-PES und kann darüber hinaus auch weitere isocyanat-reaktive Komponenten enthalten, beispielsweise weitere Polyole, niedermolekulare Kettenverlängerer und Vernetzer. Bei weiteren Polyolen handelt es sich insbesondere um solche Polyole die ausgewählt sind aus der Gruppe bestehend aus Polyesterpolyolen, Polyetherpolyolen, Polycarbonatdiolen, Polyethercarbonatpolyolen und Polyetheresterpolyolen.

Der Anteil an Verbindungen aus der Gruppe bestehend aus Polyesterpolyolen und Polyetheresterpolyolen, zu denen auch die Verbindungen PAT-PES gehören, in der Komponente B) beträgt, bezogen auf das Gesamtgewicht der Komponente B), bevorzugt mindestens 40 Gew.-% und besonders bevorzugt mindestens 50 Gew.-% und ganz besonders bevorzugt mindestens 55 Gew.-%. In einer bevorzugten Ausführungsform beträgt der Anteil an Polyesterpolyol in der Komponente B) 60 - 100 Gew.-%.

Neben den Verbindungen PAT-PES weitere geeignete Polyesterpolyole sind unter anderem Polykondensate aus Di- sowie weiterhin Tri- und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Die Polyesterpolyole können aus aromatischen und / oder aliphatischen Bausteinen hergestellt werden.

In bestimmten Ausführungsformen ist der Einsatz von Polyestern enthaltend aliphatische Dicarbonsäuren (z.B. Glutarsäure, Adipinsäure, Bernsteinsäure) bevorzugt, insbesondere der Einsatz von rein aliphatischen Polyestern (ohne aromatische Gruppen). Es kann aber in bestimmten Ausführungsformen auch sinnvoll sein, neben der Adipinsäure keine weiteren aliphatischen Dicarbonsäuren einzusetzen. Als Säurequelle können auch die entsprechenden Anhydride verwendet werden. Es können zusätzlich auch Monocarbonsäuren wie Benzoesäure und Alkancarbonsäuren mitverwendet werden.

Zur Herstellung der Polyesterpolyole kommen auch biobasierte Ausgangsstoffe und/oder deren Derivate in Frage, wie z. B. die oben unter der Beschreibung der Komponente CS4 genannten biobasierten Ausgangsstoffe. Der anteilige Einsatz insbesondere von Fettsäuren bzw. Fettsäurederivaten (Ölsäure, Sojaöl etc.) kann Vorteile aufweisen, z.B. im Hinblick auf weitere Lagerstabilität der Polyolformulierung, Dimensionsstabilität, Brandverhalten und Druckfestigkeit der Schäume.

Die neben PAT-PES optional eingesetzten Polyesterpolyole weisen bevorzugt eine Säurezahl 0 - 5 mg KOH/g auf. Dies stellt sicher, dass eine Blockade aminischer Katalysatoren durch Überführung in Ammoniumsalze nur begrenzt erfolgt und die Reaktionskinetik der Schäumreaktion wenig beeinträchtigt wird.

Polyetheresterpolyole enthalten neben den Estergruppen auch Ethergruppen und OH-Gruppen. Zu ihrer Herstellung werden neben den Polyesterkomponenten werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten. Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoffaktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Bevorzugt sind in B) neben PAT-PES weitere Polyesterpolyole und/oder Polyetheresterpolyole enthalten, welche Funktionalitäten von ≥1,2 bis ≤ 3,5, insbesondere ≥1,6 bis ≤ 2,4 und eine Hydroxylzahl zwischen 80 bis 290 mg KOH/g, besonders bevorzugt 150 bis 270 mg KOH/g und insbesondere bevorzugt von 160-260 mg KOH/g, aufweisen. Vorzugsweise besitzen die Polyesterpolyole und Polyetheresterpolyole mehr als 70 mol%, bevorzugt mehr als 80 mol%, insbesondere mehr als 90 mol%, primäre OH-Gruppen.

Daneben kann es vorteilhaft sein, einen Gehalt von bis zu 5 Gew.-% (bezogen auf B) eines aromatischen Polyesterpolyols mit einer Hydroxylzahl von 320 bis 450 mg KOH/g und einer mittleren Funktionalität von 3 bis 4,5 einzusetzen.

Der Zusatz von langkettigen Polyolen, insbesondere Polyetherpolyolen, kann die Verbesserung der Fließfähigkeit des Reaktionsgemisches und die Emulgierfähigkeit der treibmittelhaltigen Formulierung bewirken. Für die Herstellung von Verbundelementen können diese die kontinuierliche Produktion von Elementen mit flexiblen oder starren Deckschichten ermöglichen.

Diese langkettigen Polyole weisen Funktionalitäten von ≥ 1,2 bis ≤ 3,5 auf und besitzen eine Hydroxylzahl zwischen 10 und 100 mg KOH/g, bevorzugt zwischen 20 und 50 mg KOH/g. Sie besitzen mehr als 70 mol%, bevorzugt mehr als 80 mol%, insbesondere mehr als 90 mol% primäre OH-Gruppen. Die langkettigen Polyole sind bevorzugt Polyetherpolyole mit Funktionalitäten von ≥1,2 bis ≤ 3,5 und einer Hydroxylzahl zwischen 10 und 100 mg KOH/g.

Der Zusatz von mittelkettigen Polyolen, insbesondere Polyetherpolyolen, und niedermolekularen isocyanatreaktiven Verbindungen, kann die Verbesserung der Haftung und Dimensionsstabilität des resultierenden Schaumes bewirken. Für die Herstellung von Verbundelementen mit dem erfindungsgemäßen Verfahren können diese mittelkettigen Polyole die kontinuierliche Produktion von Elementen mit flexiblen oder starren Deckschichten ermöglichen. Die mittelkettigen Polyole, bei denen es sich insbesondere um Polyetherpolyole handelt, weisen Funktionalitäten von ≥ 2 bis ≤ 6 auf und besitzen eine Hydroxylzahl zwischen 300 und 700 mg KOH/g.

Bei den verwendeten Polyetherpolyolen handelt es sich um die dem Fachmann bekannten, in der Polyurethansynthese einsetzbaren Polyetherpolyole mit den genannten Merkmalen.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Statt oder zusätzlich zu reinen Polycarbonatdiolen können auch Polyethercarbonatpolyole eingesetzt werden, welche beispielsweise durch Copolymerisation von Alkylenoxiden, wie zum Beispiel Propylenoxid, mit $CO_2$ erhältlich sind.

Neben den beschrieben Polyolen können in B) weitere isocyanat-reaktive Verbindungen enthalten sein, z.B. Polyamine, Polyhydroxyverbindungen, Polyaminoalkohole und Polythiole. Insbesondere werden auch niedermolekulare Kettenverlängerer und Vernetzer einsetzt. Selbstverständlich umfassen die beschriebenen Isocyanat-reaktiven Komponenten auch solche Verbindungen mit gemischten Funktionalitäten. Diese Zusätze können eine Verbesserung der Fließfähigkeit des Reaktionsgemisches und der Emulgierfähigkeit der treibmittelhaltigen Formulierung bewirken.

Die zahlengemittelte Molmasse $M_n$ (auch: Molekulargewicht) wird im Rahmen dieser Erfindung bestimmt durch Gelpermeationschromatographie nach DIN 55672-1 vom August 2007. Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-1 (Verfahren ohne Katalysator, Juni 2013).

Die "Säurezahl" wird im Rahmen der vorliegenden Erfindung bestimmt nach der Norm DIN EN ISO 2114:2002-06.

"Funktionalität" bezeichnet im Rahmen der vorliegenden Erfindung die theoretische, aus den bekannten Einsatzstoffen und deren Mengenverhältnissen berechnete mittlere Funktionalität (zahlengemittelte Anzahl an gegenüber Isocyanaten bzw. gegenüber Polyolen reaktiven Funktionen im Molekül).

Die "Viskosität" bzw. "dynamische Viskosität" bezeichnet im Rahmen der vorliegenden Erfindung die dynamische Viskosität, welche bestimmt werden kann entsprechend DIN 53019-1 (September 2008).

Im Sinne dieser Anmeldung kann es sich bei "einem Polyesterpolyol" auch um eine Mischung unterschiedlicher Polyesterpolyole handeln, wobei in diesem Fall die Mischung der Polyesterpolyole als gesamtes die genannte OH-Zahl aufweist. Analog gilt dies für die weiteren hier aufgeführten Polyole und Komponenten.

Die Komponente A) ist ein Polyisocyanat, also ein Isocyanat mit einer NCO-Funktionalität von ≥ 2. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'-und/oder 4,4'-Diphenylmethandiisocyanat (MDI) und/oder höhere Homologe, 1,3- und/oder 1,4-Bis-(2-isocyanatoprop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Polyisocyanatkomponente A) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenylmethylen-diisocyanates, welche eine NCO - Funktionalität f > 2 aufweisen und sich durch folgende Summenformel beschreiben lassen: $C_{15}H_{10}N_2O_2[C_8H_5NO]_n$, wobei n = ganze Zahl > 0, bevorzugt n = 1, 2, 3 und 4, ist. Höherkernige Homologe $C_{15}H_{10}N_2O_2[C_8H_5NO]_n$, m = ganze Zahl $\geq$ 4) können ebenfalls im Gemisch aus organischen Polyisocyanaten A) enthalten sein. Als Polyisocyanat-Komponente A) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI. Die Polyisocyanat-Komponente A) zeichnet sich weiterhin dadurch aus, dass sie vorzugsweise eine Funktionalität von mindestens 2, insbesondere mindestens 2,2, besonders bevorzugt mindestens 2,4, und ganz besonders bevorzugt mindestens 2,7 aufweist.

Für den Einsatz als Polyisocyanat-Komponente sind polymere MDI-Typen im Hartschaum gegenüber monomeren Isocyanaten besonders bevorzugt.

Die Hilfs- und Zusatzstoffe C) umfassen insbesondere Katalysatoren, Emulgatoren und Flammschutzmittel.

Als geeignete Emulgatoren, die auch als Schaumstabilisatoren dienen, können beispielsweise alle handelsüblichen durch Polyetherseitenketten modifizierten Silikonoligomere eingesetzt werden, die auch zur Herstellung von herkömmlichen Polyurethanschäumen eingesetzt werden. Falls Emulgatoren eingesetzt werden, handelt es sich um Mengen von bevorzugt bis zu 8 Gew.-%, besonders bevorzugt von 0,5 bis 7,0 Gew.-%, jeweils bezogen auf das Gesamtgewicht der Komponenten B und C. Bevorzugte Emulgatoren sind Polyetherpolysiloxancopolymerisate. Solche sind beispielsweise unter der Bezeichnung Tegostab® B84504 und B8443 der Firma Evonik, Niax* L-5111 der Firma Momentive Performance Materials, AK8830 der Firma Maysta sowie Struksilon 8031 der Fa. Schill und Seilacher am Markt erhältlich. Auch silikonfreie Stabilisatoren, wie bspw. das Produkt LK 443 von Air Products, können eingesetzt werden.

Zur Verbesserung der Brandbeständigkeit werden den Isocyanat-reaktiven Zusammensetzungen zudem Flammschutzmittel zugesetzt. Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise halogenierte Polyester und Polyole, brom- und chlorhaltige Paraffine oder Phosphorverbindungen, wie zum Beispiel die Ester der Orthophosphorsäure und der Metaphosphorsäure, die ebenfalls Halogen enthalten können, sein. Bevorzugt werden bei Raumtemperatur flüssige Flammschutzmittel gewählt. Beispiele sind Triethylphosphat, Diethylethanphosphonat, Kresyldiphenylphosphat, Dimethylpropanphosphonat und Tris(β-chlorisopropyl)phosphat. Besonders bevorzugt sind Flammschutzmittel ausgewählt aus der Gruppe bestehend aus Tris(chloro-2-propyl)-phosphat (TCPP) und Triethylphosphat (TEP) und Mischungen daraus. Bevorzugt werden Flammschutzmittel in einer Menge von 1 bis 30 Gew.-%, besonders bevorzugt 5 bis 30 Gew.- %, bezogen auf das Gesamtgewicht der Komponenten B und C eingesetzt. Um bestimmte Eigenschaftsprofile (Viskosität, Sprödigkeit, Brennbarkeit, Halogengehalt etc.) zu erzielen, kann es auch günstig sein, unterschiedliche Flammschutzmittel miteinander zu kombinieren. In bestimmten Ausführungsformen ist die Anwesenheit von Triethylphosphat (TEP) im Flammschutzmittelgemisch oder als alleiniges Flammschutzmittel besonders vorteilhaft. Zu C) zählen auch Isocyanat-reaktive Flammschutzmittel wie die Ester bromierter Phthalsäuren oder Derivate des Dibrombutendiols, wie sie z. B. unter dem Markennamen Ixol® vertrieben werden.

Zweckmäßigerweise werden der Reaktionsmischung in der Polyurethanchemie übliche Katalysatoren zugesetzt. Die zur Herstellung eines PUR-/PIR-Hartschaumstoffes nötigen aminischen Katalysatoren sowie die als Trimerisationskatalysatoren eingesetzten Salze werden in solcher Menge eingesetzt, dass z.B. auf kontinuierlich produzierenden Anlagen Elemente mit flexiblen Deckschichten mit Geschwindigkeiten bis zu 60 m/min je nach Elementstärke produziert werden können als auch für Isolationen an Rohren, Wänden, Dächern sowie Tanks und in Kühlschränken im Sprühschaumverfahren mit hinreichender Aushärtezeit hergestellt werden können. Auch eine diskontinuierliche Herstellung ist möglich.

Beispiele für derartige Katalysatoren sind: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Natriumacetat, Natriumoctoat, Kaliumacetat, Kaliumoctoat, Natriumhydroxid oder Gemische dieser Katalysatoren.

Weiterhin umfasst die Komponente C) auch alle anderen Additive, die Polyurethanreaktionsmischungen zugesetzt werden können. Beispiele für solche Additive sind Zellregulantien, Thixotropiermittel, Weichmacher und Farbstoffe.

Für die PUR/PIR-Hartschaumstoffe weiterhin eingesetzt werden so viel Treibmittel und Co-Treibmittel D), wie zur Erzielung einer dimensionsstabilen Schaummatrix und gewünschten Rohdichte nötig ist. Der Anteil kann beispielsweise von 0 bis 6,0 Gew.-% an Co-Treibmittel und von 1,0 bis 30,0 Gew.-% an Treibmittel betragen, jeweils bezogen auf 100 Gew.-% Polyolkomponente inklusive der Hilfs- und Zusatzstoffe. Das Mengenverhältnis von Co-Treibmittel zu Treibmittel kann ja nach Bedarf von 20:1 bis 0:100 betragen.

Als Treibmittel werden Kohlenwasserstoffe, z.B. die Isomeren des Butans und Pentans, Ester wie Methylformiat oder Acetale wie Methylal und Ethylal oder Fluorkohlenwasserstoffe, z.B. HFC 245fa (1,1,1,3,3-Pentafluorpropan), HFC 365mfc (1,1,1,3,3-Pentafluorbutan) oder deren Mischungen mit HFC 227ea (Heptafluorpropan) verwendet. Auch mit Fluor und mit Fluor und Chlor gemischt substituierte C3-C5 Olefine können eingesetzt werden. Es können auch verschiedene Treibmittelklassen kombiniert werden. So lassen sich z.B. mit Mischungen von n- oder c-Pentan mit HFC 245fa im Verhältnis 75:25 (n-/c-Pentan:HFC 245fa) Wärmeleitfähigkeiten, gemessen bei 10°C, von weniger als 20 mW/mK erzielen.

Als Co-Treibmittel können auch Wasser und / oder Ameisensäure eingesetzt werden, bevorzugt in einer Menge bis 6 Gew.-%, bevorzugt 0,5 bis 4 Gew.-%, bezogen auf die Gesamtmenge an Verbindungen mit gegenüber Isocyanatgruppen reaktiven Wasserstoffatomen in der Polyolkomponente. Es kann aber auch kein Wasser verwendet werden. Auch Carbaminsäure, Malonsäure und Oxalsäure bzw. insbesondere ihre Salze mit Ammoniak und anderen Aminen können als Treibmittel geeignet sein.

In bevorzugter Ausgestaltung des erfindungsgemäßen Reaktionssystems beträgt das Gewichtsverhältnis der Komponenten A) und B) zueinander von 100 : 150 bis 100 : 300, insbesondere von 100 : 180 bis 100 : 250.

Die mit dem erfindungsgemäßen Verfahren hergestellten Polyesterpolyole PAT-PES eignen sich insbesondere gut für den Einsatz in PUR-PIR-Hartschaumrezepturen. Die mit den Polyesterpolyolen hergestellten PUR-/PIR-Hartschäume weisen eine Kombination von guten Brandschutzeigenschaften und mechanischen Eigenschaften auf.

Ein weiterer Gegenstand der Erfindung ist ein Verfahren zur Herstellung von PUR-/PIR-Hartschaumstoffen, bei dem man die Komponenten A) und B) sowie gegebenenfalls C) eines erfindungsgemäßen Reaktionssystems miteinander vermischt und reagieren lässt.

Die Herstellung der PUR-/PIR-Hartschaumstoffe, welche ebenfalls Gegenstand der Erfindung sind, erfolgt typischerweise nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden.

Ein solcher Hartschaumstoff kann in verschiedenen Anwendungsgebieten zum Einsatz kommen, vor allem als Isoliermaterial. Beispiele aus dem Bauwesen sind Wandisolationen, Rohrschalen bzw. Rohrhalbschalen, Dachisolierungen, Wandelemente und Fußbodenplatten. Insbesondere kann der Hartschaumstoff in Form einer Dämmplatte oder als Verbundelement (Laminate) mit flexiblen oder nichtflexiblen Deckschichten vorliegen und eine Dichte von 25 bis 65 kg/m$^3$ aufweisen, insbesondere 28 bis 45 kg/m$^3$. In einer anderen Ausgestaltung kann der Hartschaumstoff als Blockschaum vorliegen und eine Dichte von 25 bis 300 kg/m$^3$ aufweisen, insbesondere 30 bis 80 kg/m$^3$.

Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln. Die Deckschichten werden von einer Rolle abgecoilt und gegebenenfalls profiliert, ggf. erwärmt und ggf. coronabehandelt, um die Beschäumbarkeit der Deckschichten zu verbessern. Auf die untere Deckschicht kann vor dem Auftragen des PUR/PIR-Hartschaumstoffsystems zusätzlich ein Primer aufgetragen werden.

In einer bevorzugten Ausführungsform umfasst eine isocyanat-reaktive Zusammensetzung für die Herstellung von PUR-/PIR-Hartschaumstoffen

B) 50 bis 95 Gew.-% mindestens einer Verbindung ausgewählt aus der Gruppe enthaltend Polyesterpolyolen und Polyetheresterpolyolen mit einer Hydroxylzahl im Bereich von 80 mg KOH/g bis 290 mg KOH/g, umfassend ein oder mehrere Polyole PAT-PES,

und weiterhin

5,0 - 15,0 Gew.-% wenigstens eines Polyols mit einer Hydroxylzahl im Bereich von 150 - 300 mg KOH/g, hergestellt durch Alkoxylierung von Propylenglykol oder Ethylenglykol mit Ethylenoxid (EO) und/oder Propylenoxid (PO),

wobei die Angaben in Gew.-% jeweils auf alle Komponenten der isocyanatreaktiven Zusammensetzung B) bezogen sind.

Diese isocyanatreaktive Zusammensetzung lässt sich insbesondere vorteilhaft für die Herstellung von Reaktionsgemischen für PUR-/PIR-Hartschäume einsetzen, die für Dämmplatten verwendet werden.

In einer bevorzugten Ausführungsform umfasst eine isocyanat-reaktive Zusammensetzung für die Herstellung von PUR-/PIR-Hartschaumstoffen

B) eine isocyanat-reaktive Zusammensetzung, umfassend

50-80 Gew.-% mindestens einer Verbindung ausgewählt aus der Gruppe enthaltend Polyesterpolyolen und Polyetheresterpolyolen mit einer Hydroxylzahl von 100 bis 300 mg KOH/g und einer mittleren Funktionalität von 1,5 bis 2,5, umfassend ein oder mehrere Polyole PAT-PES, und

0-5 Gew.-% eines aromatischen und/oder aromatisch/aliphatischen Polyesterpolyols mit einer Hydroxylzahl von 320 bis 450 mg KOH/g und einer mittleren Funktionalität von 3 bis 4,5

3-15 Gew.-%, insbesondere 5,5 - 15 Gew.-%, und ganz besonders 7,0 - 15 Gew.-% eines Polyetherpolyols mit einer OH-Zahl von 10 bis 80 KOH/g und mit mittleren Funktionalitäten von $\geq 1,2$ bis $\leq 3,5$, insbesondere mit einer mittleren Funktionalität von $\geq 1,8$ bis $\leq 3,0$ oder, in einer anderen Ausführungsform, von $\geq 2,0$ bis $\leq 3,0$, hergestellt durch Alkoxylierung einer geeigneten Starterkomponente, mit einer Mischung aus Ethylenoxid (EO) und Propylenoxid (PO) mit einem EO-Gehalt von 15-70 Gew.% bezogen auf die Gesamtmenge von EO und PO, sowie

0 - 7,5 Gew.-% (insbesondere bevorzugt 0 - 5 Gew.-%) eines Polyetherpolyols mit einer OH-Zahl im Bereich von 350 -500 mg KOH/g, insbesondere von 390 - 440 mg KOH/g, hergestellt durch Alkoxylierung eines aromatischen Amins mit mindestens einem Alkylenoxid,

0 - 3,0 Gew.-% (insbesondere bevorzugt 0 - 2,5 Gew.-%) eines Polyesterpolyols mit einer OH-Zahl im Bereich von 600 - 900 mg KOH/g, insbesondere von 750 - 850 mg KOH/g;

0 - 5 Gew.-% (insbesondere bevorzugt 0 - 3 Gew.-%) niedermolekulare isocyanat - reaktive Verbindungen,

0 - 1,5 Gew.-% Wasser und

0 - 7,5 Gew.-% (insbesondere bevorzugt 0 - 5 Gew.-%) Rizinusöl,

wobei die Angaben in Gew.-% jeweils auf alle Komponenten der isocyanat-reaktiven Zusammensetzung B) bezogen sind.

Diese isocyanat-reaktive Zusammensetzung lässt sich insbesondere vorteilhaft für die Herstellung von Reaktionssystemen für PUR-/PIR-Hartschäume einsetzen, die für Metallverbundsysteme verwendet werden.

Zur Herstellung der Reaktionsgemische werden die oben genannten isocyanat-reaktiven Zusammensetzungen mit

A) einer Polyisocyanatkomponente, bevorzugt einem Gemisch von Diphenylmethan-4,4'-diisocyanat mit Isomeren und höherfunktionellen Homologen,

wobei die Angaben in Gew.-% jeweils auf alle Komponenten der isocyanatreaktiven Zusammensetzung B) bezogen sind,

in Gegenwart von gegebenenfalls Hilfs- und Zusatzstoffen C)

und einem Treibmittel und gegebenenfalls Co-Treibmittel D),

wobei der Isocyanat-Index ≥ 140 bis ≤ 450 beträgt.

Der Zusatz von einem Polyetherpolyol mit einer OH-Zahl von 10 bis 80 KOH/g kann zu einer deutlichen Verbesserung der Sprödigkeit, der Offenzelligkeit und des Brandverhaltens bei den Schäumen führen.

Die vorliegende Erfindung wird anhand der nachfolgenden Beispiele näher erläutert.

**Beispiele**

**Methoden und Begriffe**

| | |
|---|---|
| OH-Zahl: | Die Bestimmung der OH-Zahl (Hydroxylzahl) erfolgte gemäß der Vorschrift der DIN 53240-1 (Verfahren ohne Katalysator, Juni 2013). |
| Säurezahl: | Die Bestimmung der Säurezahl erfolgte gemäß DIN EN ISO 2114 (Juni 2002). |
| Viskosität: | Dynamische Viskosität wird gemessen mit einem Rheometer MCR 51 der Firma Anton Paar entsprechend DIN 53019-1 (September 2008) mit einem Messkegel CP 50-1, Durchmesser 50 mm, Winkel 1° bei Scherraten von 25, 100, 200 und 500 $s^{-1}$. Die erfindungsgemäßen und nicht erfindungsgemäßen Polyole zeigen von der Scherrate unabhängige Viskositätswerte. |
| Kennzahl: | Bezeichnet das mit 100 multiplizierte molare Verhältnis von NCO- zu NCO-reaktiven Gruppen einer Rezeptur |
| Rohdichte: | Die Rohdichte wurde gemäß DIN EN ISO 3386-1 (Oktober 2015) bestimmt. |
| Eindrucktiefe: | Die Eindrucktiefe an frisch hergestellten Laborschäumen in Testpäckchen mit einer Grundfläche von 20x20 $cm^2$ wird über die Messung der Eindringtiefe eines Stempels mit definiertem Stempeldruck nach den angegebenen Zeitspannen während der Aushärtephase bestimmt. |
| Gehalt freier Glykole: | Der Gehalt an freien Glykolen im Reaktionsgemisch wurde mittels Fouriertransformation-Infrarotspektroskopie (FTIR) ermittelt. Die FTIR Spektren wurden auf einem Bruker Vertex 70 ausgestattet mit einer Pike MIRacle ATR Einheit und einem Zinkselenid-Kristall aufgenommen. Die Gewichtsanteile an Monoethylenglykol wurden aus diesen Spektren mit einem Partial Least Squares (PLS) Model bestimmt. Für die Kalibrierung des PLS-Models wurden die Gehalte mittels Gaschromatographie untersucht. |

**Materialien**

| | |
|---|---|
| Adipinsäure | der Fa. BASF |
| Phthalsäureanhydrid | der Fa. Polynt GmbH |
| Sojaöl | der Fa. Cargill |
| Diethylenglykol | der Fa. Brenntag GmbH |
| PET | Mahlgut aus PET-Tiefziehschalen-Abfällen, Restgehalt an Polyolefinen ca. 1 Gew.% |
| Zinn(II)chlorid ·2 $H_2O$ | der Fa. Sigma Aldrich, 28 Gew.-%-ige Lösung in Ethylenglykol |
| Titantetrabutoxid | der Fa. Sigma Aldrich |
| Hoopol F-1394A | Polyesterpolyol der Firma Synthesia auf Basis von PET |
| Desmophen 4070X | Polyesterpolyol der Fa. Covestro Deutschland AG |
| Levagard TEP | Flammschutzmittel der Fa. Lanxess |
| Bayflex 0650 | der Fa. Covestro Deutschland AG, aliphatisches Polyetherpolyol mit einer OH-Zahl von 28 mg KOH/g, |
| Additiv 1132 | der Fa. Covestro Deutschland AG, Umsetzungsprodukt aus Phthalsäureanhydrid und Diethylenglycol mit einer Säurezahl von 89 mg KOH/g |
| Stabilisator 21AS08 | Silicon-Polyether-Copolymer mit einer OH-Zahl von 12 mg KOH/g der Firma Covestro Deutschland AG |
| Benzyldimethylamin | Katalysator, BASF |
| Kaliumacetat | Kaliumacetat, 25 Gew.-% in Diethylenglycol (DEG) |
| Desmodur 44V70L | der Fa. Covestro Deutschland AG mit einem NCO-Gehalt von 30 bis 32 Gew.% |

**Polyestersynthese und Charakterisierung der Produkte**

**Beispiel 1*(Vergleich):**

In einem 4-Liter-Vierhalskolben, ausgestattet mit mechanischem Rührer, 50 cm Vigreux-Kolonne, Thermometer, Stickstoffeinleitung, sowie Kolonnenkopf, Destillationsbrücke und Vakuummembranpumpe, wurden 289 g Adipinsäure, 172 g Sojaöl, 146 g Phthalsäureanhydrid und 784 g Diethylenglykol vor und erhitzte unter Stickstoffüberschleierung auf 140 °C. Anschließend wurden 699 g recyceltes PET zugegeben und die Temperatur auf 220 °C erhöht, wobei ab einer Temperatur von ca. 160°C Reaktionswasser abdestillierte. Das Reaktionsgemisch wurde für 6 h bei 220 °C gerührt, bis eine homogene Lösung erhalten wird. Die Wasserabspaltung wurde nach Zugabe von 20 ppm Zinn(II)chlorid-dihydrat bei einem Vakuum von 300 mbar und einer Temperatur von 220 °C vervollständigt bis zum Erreichen einer Säurezahl zwischen 1,7 und 3,0 mg KOH/g. Nach Abkühlen auf Raumtemperatur bildet die ursprünglich klare, homogene Lösung innerhalb eines Tages eine Trübung aus.

Analyse des Polyesters:

| | |
|---|---|
| Hydroxylzahl: | 237,0 mg KOH/g |
| Säurezahl: | 2,1 mg KOH/g |
| Wassergehalt: | 0,16 Gew.% |
| Gehalt an freiem Ethylenglykol: | 1,53 Gew.-% |

**Beispiel 2* (Vergleich):**

In einem 4-Liter-Vierhalskolben, ausgestattet mit mechanischem Rührer, 50 cm Vigreux-Kolonne, Thermometer, Stickstoffeinleitung, sowie Kolonnenkopf, Destillationsbrücke und Vakuummembranpumpe, wurden 289 g Adipinsäure, 172 g Sojaöl, 146 g Phthalsäureanhydrid und 784 g Diethylenglykol vor und erhitzte unter Stickstoffüberschleierung auf 140 °C. Anschließend wurden 699 g recyceltes PET zugegeben und die Temperatur auf 220 °C erhöht, wobei ab einer Temperatur von ca. 160°C Reaktionswasser abdestillierte. Nach ca. 2 Stunden kam die Abspaltung des Reaktionswassers zum Erliegen. Das Reaktionsgemisch enthielt nach wie vor ungelöstes rPET. Die Wasserabspaltung wurde nach Zugabe von 20 ppm Zinn(II)chlorid-dihydrat bei einem Vakuum von 300 mbar und einer Temperatur von 220 °C vervollständigt bis zum Erreichen einer Säurezahl zwischen 1,7 und 3,0 mg KOH/g. Nach Abkühlen auf Raumtemperatur bildet die ursprünglich klare, homogene Lösung innerhalb eines Tages eine Trübung aus.

Analyse des Polyesters:

| | |
|---|---|
| Hydroxylzahl: | 235,9 mg KOH/g |
| Säurezahl: | 1,7 mg KOH/g |
| Wassergehalt: | 0,20 Gew.% |
| Gehalt an freiem Ethylenglykol: | 1,57 Gew.% |

**Beispiel 3:**

850 g des Produktes aus Beispiel 2 wurden nach Erreichen der Zielsäurezahl für weitere 4 h unter Stickstoffüberschleierung bei 220 °C nachgerührt. Die Mindestlänge der Nachrührzeit wurde mit einer Messung gemäß Beispiel 7 bestimmt. Das so erhaltene Produkt ist bei Lagerung bei Raumtemperatur für mehr als 3 Monate lagerstabil, d.h. es bleibt klar und bildet kein Sediment.

Analyse des Polyesters:

| | |
|---|---|
| Hydroxylzahl: | 238,1 mg KOH/g |
| Säurezahl: | 1,7 mg KOH/g |
| Wassergehalt: | 0,12 Gew.% |
| Viskosität: | 2990 mPa · s bei 25 °C |
| Gehalt an freiem Ethylenglykol: | 1,70 Gew.% |

Die Polyesterpolyole aus den Beispielen 1 - 3 wurden zur Herstellung von PUR-/PIR-Hartschaumstoffen verwendet.

**Tabelle 1** Zusammensetzung und Eigenschaften von PUR-/PIR-Hartschaumstoffen.

| Beispiel | | 4* | 5* | 6 |
|---|---|---|---|---|
| Polyester aus Beispiel 1 | [Teile] | 79 | - | - |
| Polyester aus Beispiel 2 | [Teile] | - | 79 | - |
| Polyester aus Beispiel 3 | [Teile] | - | - | 79 |
| Bayflex 0650 | [Teile] | 10 | 10 | 10 |
| Levagard TEP | [Teile] | 8 | 8 | 8 |
| Desmophen 4070X | [Teile] | 2 | 2 | 2 |
| Wasser | [Teile] | 0,4 | 0,4 | 0,45 |
| Additiv 1132 | [Teile] | 0,5 | 0,5 | 0,5 |
| Zusatzmittel 21AS08 | [Teile] | 2,5 | 2,5 | 2,5 |
| Desmorapid DB | [Teile] | 1,2 | 1,2 | 1,2 |
| Kaliumacetat 25% in DEG | [Teile] | 2,5 | 2,5 | 2,5 |
| n-Pentan | [Teile] | 14,5 | 14,5 | 14,5 |
| Desmodur 44V70L | [Teile] | 200 | 200 | 200 |
| Kennzahl | [-] | 324 | 320 | 323 |
| Startzeit | [s] | 14 | 13 | 14 |
| Abbindezeit | [s] | 44 | 45 | 42 |
| Klebfreizeit | [s] | 64 | 66 | 56 |
| Kernrohdichte | [kg/m³] | 37,4 | 37,0 | 37,6 |
| Eindrucktiefe nach 2,5 min | [mm] | 9,50 | 11,34 | 8,33 |
| Eindrucktiefe nach 5 min | [mm] | 10,38 | 12,21 | 9,29 |

Die Beispiele 4 - 6 zeigen, dass das Verfahren zur Herstellung der Polyesterpolyole die Aushärtung der PUR-/PIR-Hartschaumstoffe beeinflusst. Polyesterpolyole hergestellt über das erfindungsgemäße Verfahren führen zu PUR-/PIR-Hartschaumstoffen mit beschleunigter Aushärtung beziehungsweise geringeren Eindrucktiefen nach dem Verschäumen.

**Bestimmung der Nachrührzeit**

Die Bestimmung der Mindestlänge der Nachrührzeit kann über die Messung der Konzentration an freien Glykolen während des Nachruhrens bestimmt werden, z.B. mittels Gaschromatographie. Die für die erfindungsgemäße Synthese gemäß Beispiel 3 notwendige Nachrührzeit wurde analog Beispiel 7 durch zeitabhängige Konzentrationsbestimmungen des freien Monoethylenglykols im Gemisch bestimmt.

**Beispiel 7:**

In einem 4-Liter-Vierhalskolben, ausgestattet mit mechanischem Rührer, 50 cm Vigreux-Kolonne, Thermometer, Stickstoffeinleitung, sowie Kolonnenkopf, Destillationsbrücke und Vakuummembranpumpe, wurden 289 g Adipinsäure, 172 g Sojaöl, 146 g Phthalsäureanhydrid und 784 g Diethylenglykol vor und erhitzte unter Stickstoffüberschleierung auf 140°C. Anschließend wurden 699 g recyceltes PET zugegeben und die Temperatur auf 220 °C erhöht, wobei ab einer Temperatur von ca. 160 °C Reaktionswasser abdestillierte. Nach ca. 2 Stunden kam die Abspaltung des Reaktionswassers zum Erliegen. Das Reaktionsgemisch enthielt nach wie vor ungelöstes rPET. Die Wasserabspaltung wurde nach Zugabe von 10 ppm Titantetrabutoxid bei einem Vakuum von 300 mbar und einer Temperatur von 220 °C vervollständigt bis zum Erreichen einer Säurezahl zwischen 1,7 und 3,0 mg KOH/g. Anschließend wurde das Produkt bei 220 °C unter Stickstoffüberschleierung nachgerührt. Zur Bestimmung der Dauer der Nachrührzeit wurde nach Beenden der Vakuumdestillation in regelmäßigen Abständen der Gehalt an Monoethylenglykol bestimmt. Das Nachtemperieren wird beendet, sobald die Änderung im Gehalt an freiem Monoethylenglykol

$$\frac{d\,[c(Ethylenglykol)]}{dt} < 0{,}1\,Gew.-\%/h$$

| Nachrührzeit [h] | Säurezahl [mg KOH/g] | Gehalt an freiem Ethylenglykol in Gew.-% |
|---|---|---|
| 0 | 2,3 | 1,34 |
| 0,5 | 2,5 | 1,65 |
| 1 | 2,3 | 1,66 |

Das so erhaltene Produkt ist bei Lagerung bei Raumtemperatur für mehr als 3 Monate lagerstabil, d.h. es bleibt klar und bildet kein Sediment.

Analyse des Polyesters:

Hydroxylzahl: 234,1 mg KOH/g

Säurezahl: 2,3 mg KOH/g

In Abhängigkeit ob ein Veresterungskatalysator verwendet wird und in welcher Konzentration sind unterschiedlich lange Nachrührzeiten nach dem Erreichen der erwünschten Säurezahl von 1,7 - 3,0 mg KOH/g notwendig.

**Patentansprüche**

1. Verfahren zur Herstellung eines Polyesterpolyols PAT-PES mit einer Säurezahl von > 1,6 mg KOH/g, insbesondere 1,7 - 3,5 mg KOH/g, ganz besonders bevorzugt von 2,0 - 3,0 mg KOH/g, enthaltend die Schritte

   a. Vorlegen eines Reaktionsgemisches R umfassend mindestens

   • ein Polyalkylenterephthalat (PAT) aus Terephthalsäure und einem Diol ausgewählt aus der Gruppe bestehend aus 1,2-Ethandiol, 1,3-Propandiol und 1,4-Butandiol (PAT-AK),
   • eine aliphatische Dicarbonsäure oder Dicarbonsäurederivat (CS3) und
   • mindestens ein Diol mit einem Molgewicht von 100-190 g/mol oder ein Derivat davon (AK2),

   b. Umsetzung des Reaktionsgemisches R bei einer Temperatur von mindestens 210 °C,

   **gekennzeichnet dadurch, dass** die Umsetzung abgebrochen wird, wenn das Reaktionsgemisch eine Säurezahl von > 1,6 mg KOH/g, insbesondere 1,7 - 3,5 mg KOH/g ("Zielsäurezahl") aufweist und die Konzentrationsänderung an freien Diolen PAT-AK im Gemisch weniger als 0,1 Gew-% / h beträgt.

2. Verfahren gemäß Anspruch 1, **dadurch gekennzeichnet, dass** in Schritt b) ein reduzierter Druck ≤ 600 mbar, insbesondere ≤ 500 mbar, angelegt wird und entfernt wird, wenn das Produkt die gewünschte Zielsäurezahl von > 1,6 mg KOH/g, insbesondere 1,7 - 3,5 mg KOH/g erreicht hat.

3. Verfahren gemäß Anspruch 1 oder 2, **dadurch gekennzeichnet, dass** R weiterhin mindestens eine aliphatische Monocarbonsäure oder ein aliphatisches Monocarbonsäurederivat enthält.

4. Verfahren gemäß einem der Ansprüche 1 - 3, **dadurch gekennzeichnet, dass** R weiterhin mindestens eine aromatische Dicarbonsäure oder ein aromatisches Dicarbonsäurederivat verschieden von PAT enthält.

5. Verfahren gemäß Anspruch 1, bei dem das Polyalkylenterephthalat PAT mit einem Gemisch CS aus Carboxyfunktionellen Verbindungen umfassend:

   CS1 gegebenenfalls einer oder mehrerer weiterer Verbindungen ausgewählt aus der Gruppe bestehend aus Terephthalsäure und Derivaten der Terephthalsäure verschieden von PAT,

CS2 optional, bevorzugt mindestens eine, von PAT und CS1 verschiedene Verbindung ausgewählt aus der Gruppe bestehend aus aromatischen Dicarbonsäuren und deren Derivate, insbesondere ein niedermolekulares Derivat, ganz besonders bevorzugt Phthalsäureanhydrid,

CS3 mindestens eine Verbindung ausgewählt aus der Gruppe bestehend aus aliphatischen Dicarbonsäuren und deren Derivaten,

CS4 optional, bevorzugt mindestens eine Verbindung ausgewählt aus der Gruppe bestehend aus Monocarbonsäuren mit einem Molgewicht $\geq$100 g/mol und deren Derivaten,

CS5 optional weitere Carbonsäuren und / oder deren Derivate,

umgesetzt wird mit einem Gemisch AK aus alkoholischen Verbindungen umfassend:

AK1 Optional mindestens eine Verbindung ausgewählt aus der Gruppe bestehend aus Diolen mit einem Molgewicht <100 g/mol und deren Derivate,

AK2 mindestens eine Verbindung ausgewählt aus der Gruppe bestehend aus Diolen mit einem Molgewicht von 100-190 g/mol, bevorzugt mit >80 mol-% der OH-Funktionen primäre aliphatische OH-Funktionen, und deren Derivate,

AK3 optional eine oder mehrere Verbindungen ausgewählt aus der Gruppe bestehend aus Diolen mit einem Molgewicht von mit einem Molgewicht > 190 g/mol, bevorzugt 191-800 g/mol, oder deren Derivate,

AK4 optional eine oder mehrere Verbindungen ausgewählt aus der Gruppe bestehend aus bestehend aus Polyhydroxylverbindungen mit einer Funktionalität $\geq$3 und mit einem Molgewicht 90-190 g/mol (keine Polyether) und deren Derivaten

AK5 optional ein oder mehrere Monoole, z. B. nichtionische Tenside, und / oder Derivate dieser Alkohole.

6. Verfahren gemäß einem der Ansprüche 1 - 5 **dadurch gekennzeichnet, dass** das Polyalkylenterephthalat PAT eine OH-Zahl von < 60 mg KOH/g aufweist und / oder dass die Komponente PAT Polyethylenterephthalat umfasst.

7. Verfahren gemäß einem der Ansprüche 1 - 6, **dadurch gekennzeichnet, dass** die Komponente CS3 ausgewählt ist aus der Gruppe bestehend aus aliphatischen Dicarbonsäuren mit einer Säurezahl von >300 mg KOH/g bzw. deren Derivate, bevorzugt aliphatischen C4- bis C12- Dicarbonsäuren und deren Derivate, ganz besonders bevorzugt Bernsteinsäure, Glutarsäure und Adipinsäure, Derivate dieser Säuren, sowie Mischungen der vorgenannten Verbindungen.

8. Verfahren gemäß einem der Ansprüche 1 - 7, **dadurch gekennzeichnet, dass** die Komponente AK2 > 80 mol% Diethylenglykol enthält.

9. Polyesterpolyole PAT-PES hergestellt nach einem Verfahren gemäß einem der Ansprüche 1 - 8, die eine Säurezahl von > 1,6 mg KOH/g, insbesondere bevorzugt von 1,7 - 3,5 mg KOH/g, ganz besonders bevorzugt von 2,0 bis 3,0 mg KOH/g aufweisen.

10. Polyesterpolyole PAT-PES gemäß Anspruch 9, welche aufgebaut sind aus Baueinheiten cs, die von Säurekomponenten abgeleitet sind, und Baueinheiten ak, welche von alkoholischen Komponenten abgeleitet sind, wobei cs aus

| cs1 | 40-60 | Mol.-% bezogen auf cs, | bevorzugt 45-55 Mol.%, Baueinheiten abgeleitet von Terephthalsäure, |
|---|---|---|---|
| cs2 | 8-28 | Mol.-% bezogen auf cs, | bevorzugt 10-20 Mol.%, Baueinheiten abgeleitet von mindestens einer weiteren aromatischen Dicarbonsäure, welche verschieden ist von Terephthalsäure, |
| cs3 | 15-35 | Mol.-% bezogen auf cs, | bevorzugt 25-35 Mol.-%, Baueinheiten abgeleitet von mindestens einer aliphatischen Dicarbonsäure, |
| cs4 | 4-14 | Mol.-% bezogen auf cs, | Baueinheiten abgeleitet von mindestens einer Monocarbonsäure mit einem Molgewicht $\geq$100 g/mol, und |
| cs5 | 0-33 | Mol.-% bezogen auf cs, | Baueinheiten abgeleitet von weiteren Carbonsäuren, |

besteht, und wobei ak aus

(fortgesetzt)

| ak1 | 25-40 | Mol.-% bezogen auf ak, | bevorzugt 25-38 Mol.-% Baueinheiten abgeleitet von ein oder mehreren Diolen mit einem Molgewicht <100 g/mol, |
|---|---|---|---|
| ak2 | 60-75 | Mol.-% bezogen auf ak, | Baueinheiten abgeleitet von ein oder mehreren Diolen mit einem Molgewicht von 100-190 g/mol, bevorzugt mit >80 mol-% primären aliphatischen OH-Funktionen, |
| ak3 | 0-3 | Mol.-% bezogen auf ak, | Baueinheiten abgeleitet von ein oder mehreren Diolen mit einem Molgewicht >190 g/mol, bevorzugt 191 - 800 g/mol, |
| ak4 | 0-3 | Mol.-% bezogen auf ak, | Baueinheiten abgeleitet von ein oder mehreren Polyolen mit einer Funktionalität $\geq 3$ und mit einem Molgewicht 90-190 g/mol, nicht umfassend Polyether, |
| ak5 | 0-15 | Mol.-% bezogen auf ak, | Baueinheiten abgeleitet von ein oder mehreren Monoolen, z. B. nichtionische Tensiden, besteht. |

11. Polyesterpolyole PAT-PES gemäß einem der Ansprüche 9 und 10, welche eine Viskosität von $\leq$ 8 Pa*s (25°C), insbesondere 1 - 8 Pa*s (25°C), besonders bevorzugt 1 - 7 Pa*s (25°C) und ganz besonders bevorzugt von 1 - 5 Pa*s (25 °C) und / oder eine Hydroxylzahl von 150 bis 350 mg KOH/g aufweisen, bevorzugt von 160 bis 260 mg KOH/g, besonders bevorzugt von 165 bis 260 mg KOH/g.

12. Isocyanat-reaktive Zusammensetzung B) für die Herstellung von PUR- und / oder PUR/PIR-Hartschaumstoffen enthaltend ein Polyesterpolyol PAT-PES gemäß einem der Ansprüche 9-11.

13. Isocyanat-reaktive Zusammensetzung B) gemäß Anspruch 12, **dadurch gekennzeichnet, dass** sie

50 bis 95 Gew.-% mindestens einer Verbindung ausgewählt aus der Gruppe enthaltend Polyesterpolyolen und Polyetheresterpolyolen mit einer Hydroxylzahl im Bereich von 80 mg KOH/g bis 290 mg KOH/g, umfassend ein oder mehrere Polyole PAT-PES,
und
5,0 - 15,0 Gew.-% wenigstens eines Poylols mit einer Hydroxylzahl im Bereich von 150 - 300 mg KOH/g, hergestellt durch Alkoxylierung von Propylenglykol oder Ethylenglykol mit Ethylenoxid (EO) und oder Propylenoxid (PO),
wobei die Angaben in Gew.-% jeweils auf alle Komponenten der isocyanatreaktiven Zusammensetzung B) bezogen sind,
enthält.

14. Isocyanat-reaktive Zusammensetzung B) gemäß Anspruch 11, **dadurch gekennzeichnet, dass** sie 50-80 Gew.-% mindestens einer Verbindung ausgewählt aus der Gruppe enthaltend Polyesterpolyole und Polyetheresterpolyole mit einer Hydroxylzahl von 100 bis 300 mg KOH/g und einer mittleren Funktionalität von 1,5 bis 2,5, umfassend ein oder mehrere Polyole PAT-PES, und

0-5 Gew.-% eines aromatischen und/oder aromatisch/aliphatischen Polyesterpolyols mit einer Hydroxylzahl von 320 bis 450 mg KOH/g und einer mittleren Funktionalität von 3 bis 4,5, und
5,5-15 Gew.-% eines Polyetherpolyols mit einer OH-Zahl von 10 bis 80 KOH/g und mit mittleren Funktionalitäten von $\geq$1,2 bis $\leq$ 3,5, insbesondere einer mittleren Funktionalität von $\geq$ 1,8 bis $\leq$ 3,0, hergestellt durch Alkoxylierung einer geeigneten Starterkomponente, mit einer Mischung aus Ethylenoxid (EO) und Propylenoxid (PO) mit einem EO-Gehalt von 15-70 Gew.% bezogen auf die Gesamtmenge von EO und PO, und
0 - 7,5 Gew.-% (insbesondere bevorzugt 0 - 5 Gew.-%) eines Polyetherpolyols mit einer OH-Zahl im Bereich von 350 -500 mg KOH/g, insbesondere von 390 - 440 mg KOH/g, hergestellt durch Alkoxylierung eines aromatischen Amins mit mindestens einem Alkylenoxid, und
0 - 3,0 Gew.-% (insbesondere bevorzugt 0 - 2,5 Gew.-%) eines Polyesterpolyols mit einer OH-Zahl im Bereich von 600 - 900 mg KOH/g, insbesondere von 750 - 850 mg KOH/g, und
0 - 5 Gew.-% (insbesondere bevorzugt 0 - 3 Gew.-%) niedermolekulare isocyanat - reaktive Verbindungen,
0 - 1,5 Gew.-% Wasser und
0 - 7,5 Gew.-% (insbesondere bevorzugt 0 - 5 Gew.-%) Rizinusöl,
wobei die Angaben in Gew.-% jeweils auf alle Komponenten der isocyanat-reaktiven Zusammensetzung B) bezogen sind,

enthält.

15. PUR/PIR-Hartschaumstoff, erhältlich durch Vermischen und Umsetzen eines Reaktionsgemisches umfassend eine isocyanat-reaktive Zusammensetzung gemäß einem der Ansprüche 12 - 14 mit

A) einer Polyisocyanatkomponente, bevorzugt einem Gemisch von Diphenylmethan-4,4'-diisocyanat mit Isomeren und höherfunktionellen Homologen,

in Gegenwart von gegebenenfalls Hilfs- und Zusatzstoffen C)
und einem Treibmittel und gegebenenfalls Co-Treibmittel D),
wobei der Isocyanat-Index ≥ 140 bis ≤ 450 beträgt.

Europäisches
Patentamt

European
Patent Office

Office européen
des brevets

# EUROPÄISCHER RECHERCHENBERICHT

Nummer der Anmeldung

EP 22 15 7474

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 3 957 665 A1 (COVESTRO DEUTSCHLAND AG [DE]) 23. Februar 2022 (2022-02-23) * Absatz [0001]; Ansprüche 1-15 * * Absatz [0095] - Absatz [0098]; Beispiel 6 (VB); Tabelle 1 * * Absatz [0099]; Beispiel 15 (VB); Tabelle 3 * ----- | 1,2,4-15 | INV. C08G18/16 C08G18/18 C08G18/22 C08G18/40 C08G18/42 C08G18/76 C08G63/18 |
| X,D | EP 0 974 611 B1 (BASF AG [DE]) 31. März 2004 (2004-03-31) * Absätze [0001], [0013]; Ansprüche 1-12 * * Absatz [0038] - Absatz [0040]; Beispiele 1-3 * * Absatz [0031]; Anspruch 11 * * Absätze [0044], [0045]; Beispiel 7 * ----- | 1-15 | C08G63/672 C08G63/85 C08J9/00 C08J9/08 C08J9/14 ADD. C08G101/00 |
| X A | US 4 439 550 A (BRENNAN MICHAEL E [US]) 27. März 1984 (1984-03-27) * Spalte 1, Zeile 15 - Zeile 21; Ansprüche 1-18 * * Beispiele I, III, V * * Beispiele 7D, 7F, 8J, 8L * ----- | 1-9, 11-15 10 | |
| X A | DE 10 2007 063442 A1 (GT ELEKTROTECHNISCHE PRODUKTE [DE]) 16. Juli 2009 (2009-07-16) * Absatz [0001]; Ansprüche 1-11 * * Absätze [0058], [0060]; Beispiele 3, 5; Tabelle 1 * * Absatz [0052] * * Absatz [0071] - Absatz [0073]; Tabelle 2 * ----- -/-- | 1-9, 11-15 10 | |

**RECHERCHIERTE SACHGEBIETE (IPC)**

C08G
C09J
C08J

Der vorliegende Recherchenbericht wurde für alle Patentansprüche erstellt

| Recherchenort | Abschlußdatum der Recherche | Prüfer |
|---|---|---|
| München | 7. Juli 2022 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes Dokument

EPO FORM 1503 03.82 (P04C03)

Seite 1 von 2

# EUROPÄISCHER RECHERCHENBERICHT

**Nummer der Anmeldung**

**EP 22 15 7474**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 113 507 B2 (ARCO CHEM TECH [US]) 5. Januar 1994 (1994-01-05) | 9,11-15 | |
| A | * Seite 2, Zeile 3 – Zeile 5; Ansprüche 1-13 * <br> * Seite 9, Zeile 13 – Zeile 39; Beispiele IX, X * <br> * Seiten 15, 16; Beispiele M, N, S, T; Tabellen * <br> ----- | 1-8,10 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 7. Juli 2022 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

`EP 22 15 7474`

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

`07-07-2022`

| Im Recherchenbericht angeführtes Patentdokument | Datum der Veröffentlichung | Mitglied(er) der Patentfamilie | Datum der Veröffentlichung |
|---|---|---|---|
| EP 3957665 A1 | 23-02-2022 | EP 3957665 A1 | 23-02-2022 |
| | | WO 2022038050 A1 | 24-02-2022 |
| EP 0974611 B1 | 31-03-2004 | AT 263201 T | 15-04-2004 |
| | | DE 19832885 A1 | 27-01-2000 |
| | | EP 0974611 A2 | 26-01-2000 |
| | | ES 2218908 T3 | 16-11-2004 |
| US 4439550 A | 27-03-1984 | JP S59105024 A | 18-06-1984 |
| | | US 4439550 A | 27-03-1984 |
| DE 102007063442 A1 | 16-07-2009 | KEINE | |
| EP 0113507 B2 | 05-01-1994 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2010043624 A
- EP 0974611 A
- EP 3283545 A
- US 4559370 A
- JP 2000191756 B
- EP 1178062 A
- EP 3957665 A
- WO 2010088227 A